# FASCICULE DE BREVET EUROPEEN

(11) **EP 3 080 051 B1**
(45) Date de publication et mention de la délivrance du brevet: **22.11.2017**
(21) Numéro de dépôt: 14830639.2
(22) Date de dépôt: 12.12.2014
(51) Int. Cl.: C02F 1/52

(54) **PROCEDE ET INSTALLATION DE TRAITEMENT D'UN LIQUIDE CONTENANT UNE SUSPENSION, EN PARTICULIER EAU BRUTE, BOUES, EFFLUENTS URBAINS OU INDUSTRIELS**
VERFAHREN UND ANLAGE ZUR BEHANDLUNG EINER FLÜSSIGKEIT MIT EINER SUSPENSION, INSBESONDERE ROHWASSER, SCHLAMM ODER STÄDTISCHE ODER INDUSTRIEABWÄSSER
METHOD AND FACILITY FOR TREATING A LIQUID CONTAINING A SUSPENSION, IN PARTICULAR RAW WATER, SLUDGE, OR URBAN OR INDUSTRIAL EFFLUENTS

(30) Priorité: 13.12.2013 FR 1362580
(43) Date de publication de la demande: 19.10.2016
(73) Titulaire: Degrémont, 92040 Paris La Défense (FR)
(72) Inventeur: FACCIOLI, Jean-Michel, F-75011 Paris (FR); THOMAS, Gauthier, F-38300 Ruy (FR)
(74) Mandataire: Cabinet Armengaud Aîné
(86) Numéro de dépôt international: PCT/IB2014/066847
(87) Numéro de publication internationale: WO 2015/087292

(56) Documents cités:
- FR-A1- 2 971 782

## Description

L'invention est relative à un procédé de traitement d'un liquide contenant une suspension, en particulier eau brute, boues diluées, effluents urbains ou industriels, comportant une étape de floculation par injection d'un ou plusieurs produits de conditionnement dans le liquide à traiter, afin de générer des flocs pour effectuer une séparation ultérieure solide/liquide.

Le procédé s'applique dans tous les domaines du traitement d'une suspension, issue d'une production d'eau potable ou du traitement d'effluents résiduaires urbains ou industriels, mettant en oeuvre une floculation. Le terme générique de floculation englobe les termes de coagulation et/ou floculation relatifs à des opérations qui utilisent des réactifs de natures différentes mais toujours pour agglomérer des particules en suspension dans le liquide.

Une bonne floculation de la suspension à traiter est déterminante pour garantir les performances des dispositifs de séparation solide/liquide, telle que décantation, épaississement, flottation, déshydratation, ou autre effet, qui se trouvent en aval de l'étape de floculation.

Il est ainsi impératif de déterminer en permanence le taux de conditionnement, c'est-à-dire la dose de produit(s) de conditionnement à ajouter à la suspension à traiter. La quantité de produit(s) de conditionnement ajoutée doit être celle :
- nécessaire pour obtenir une floculation optimale quelles que soient les variations de charges, débits, concentration, notamment en Matières en Suspension (MES), et de qualité de l'effluent à traiter, par exemple le rapport Matière Volatile/Matière Sèche (MV/MS),
- juste suffisante pour éviter un surdosage ou un sous-dosage perturbant le fonctionnement de la séparation solide/liquide et des équipements situés en aval, ces sous ou surdosages pouvant être facteurs de pertes économiques

Une première solution actuelle consiste à appliquer à la suspension, un taux de conditionnement déterminé en laboratoire. Une prise d'échantillon et une analyse en laboratoire doivent alors être réalisées rapidement de telle sorte que la nature et la qualité de l'effluent ne soient pas altérées. Le taux de conditionnement est souvent exprimé par un rapport massique en produit de conditionnement et matières sèches : par exemple en kg _{de produit}/T _{de matières sèches} (kilogrammes de matière active / tonne de matières sèches).

Une autre solution, telle que décrite dans FR 2 971 782 au nom de la Société déposante, consiste à utiliser un système de vision industrielle qui permet de réguler en permanence la qualité de la floculation. Le système permet de :
- caractériser la taille des flocs,
- les classer par familles de petits flocs S (small) et de gros flocs L (large),
- estimer le rapport S/L,
- déterminer une valeur limite Q pour ce rapport S/L,
- réguler la quantité de produit injecté en fonction du rapport S/L : augmentation du taux de traitement lorsque le rapport S/L est supérieur à la valeur cible Q, diminution du taux de traitement lorsque le rapport S/L est inférieur à la valeur cible Q.

Ces solutions de l'état de la technique présentent plusieurs inconvénients, dont les suivants.

Dans le cas d'une analyse ponctuelle en laboratoire, la transposition du taux de traitement s'appuie sur différentes hypothèses :
- la nature et la concentration des produits de conditionnement sont constantes dans le temps,
- la qualité de la suspension est constante dans le temps

Ces hypothèses sont rarement vérifiées et le traitement peut alors être inapproprié.

Dans le cas de FR 2 971 782, la régulation est rendue difficile par l'évolution de la qualité des boues. En effet, les nombres de gros flocs L et de petits flocs S sont liés à la nature et à la qualité de l'effluent. Dès lors, fixer une limite reprend l'hypothèse d'avoir une qualité d'effluent constante, cela est rarement vérifié.

De plus, le système tel que décrit dans FR 2 971 782 peut générer un bruit d'intensité suffisante pour perturber la régulation.

Un des buts de l'invention est de fournir une solution quasi-universelle et fiable d'un traitement de liquide contenant une suspension qui ne présente plus, ou à un degré moindre, les inconvénients mentionnés ci-dessus. Il est souhaitable en outre que le procédé de traitement soit d'une mise en oeuvre simple, et relativement économique.

Selon l'invention, le procédé de traitement d'un liquide contenant une suspension de matières solides, en particulier eau brute, boues, effluents urbains ou industriels, comportant une étape de floculation par injection dans le liquide à traiter d'un ou plusieurs produits de conditionnement selon un taux de conditionnement, afin de générer des flocs pour une séparation ultérieure solide/liquide, selon lequel :
- on estime, par un système de vision industrielle, la taille des flocs,
- on classe les flocs en deux catégories à savoir gros flocs et petits flocs avec dénombrement par catégorie,
- on estime le rapport L/S du nombre L de gros flocs au nombre S de petits flocs, est caractérisé en ce que :
- on augmente, en fonction du temps, le taux de conditionnement à partir d'une valeur basse paramétrable,
- on suit la variation du taux de conditionnement et du rapport L/S jusqu'à atteindre un maximum pour ce rapport,
- et on choisit, pour l'étape de floculation, le taux de conditionnement correspondant au maximum obtenu pour le rapport L/S.

L'invention consiste à déterminer périodiquement, ou en continu, le taux de traitement optimum à appliquer à une suspension.

Avantageusement, on augmente de manière continue, en particulier de manière linéaire, en fonction du temps, le taux de conditionnement du ou des produits de conditionnement. En variante, on peut augmenter de manière discontinue, en particulier par échelons, en fonction du temps, le taux de conditionnement du ou des produits de conditionnement.

Lorsque le liquide à traiter circule dans une conduite, les estimations peuvent être effectuées en ligne, et l'injection de produit de conditionnement dans la conduite est assurée par une pompe doseuse dont le débit est piloté pour assurer l'augmentation du taux de traitement.

Dans le cas d'un liquide à traiter circulant dans une conduite principale, la variation du taux de conditionnement et du rapport L/S jusqu'à atteindre un maximum pour ce rapport, et l'estimation du taux optimum peuvent être effectuées sur une fraction du débit de la conduite principale, dans une conduite dérivée, et le taux de conditionnement optimum est appliqué au débit de la conduite principale.

La durée de l'augmentation du taux de conditionnement peut être d'environ 10 minutes. La détermination du maximum du rapport L/S peut être renouvelée périodiquement, en particulier par période d'1 heure.

Le système de vision industrielle fonctionne alors suivant les étapes suivantes :
- caractérisation de la taille des flocs,
- classification des flocs par famille de petits flocs S et de gros flocs L,
- estimation du rapport L/S,
- détermination de l'optimum par un accroissement du taux de traitement :
   le système incrémente progressivement le taux de traitement depuis une valeur basse paramétrable. En parallèle à cette incrémentation, le rapport L/S augmente jusqu'à l'apparition d'un maximum. L'optimum se situe alors au maximum du rapport L/S.

L'invention concerne également une installation de traitement d'un liquide contenant une suspension, en particulier eau brute, boues, effluents urbains ou industriels, pour la mise en oeuvre du procédé tel que défini précédemment, comportant :
- des moyens d'alimentation en liquide à traiter,
- un moyen réglable d'injection globale de produit(s) de conditionnement dans la totalité du liquide à traiter,
- un système de vision industrielle propre à estimer la taille des flocs,
- un calculateur ou automate programmable dont une entrée est reliée à une sortie du système de vision industrielle pour en recevoir les informations sur les flocs, et établir le rapport L/S du nombre de gros flocs au nombre de petits flocs, et commander le moyen réglable d'injection,
caractérisée en ce que :
- ladite installation comporte un dispositif d'injection d'essai de produit(s) de conditionnement dans tout ou fraction du liquide à traiter,
- le calculateur est programmé pour
   - commander le dispositif d'injection d'essai et faire augmenter, en fonction du temps, le débit d'injection et le taux de conditionnement à partir d'une valeur basse paramétrable,
   - suivre la variation du taux de conditionnement et du rapport L/S jusqu'à atteindre un maximum pour ce rapport,
   - et appliquer au moyen d'injection globale, pour l'étape de floculation, le taux de conditionnement correspondant au maximum obtenu pour le rapport L/S.

L'installation peut comporter un dispositif de mélange du floculant en aval du dispositif d'injection d'essai et en amont du système de vision industrielle.

Dans le cas où le liquide à traiter circule dans une conduite, le dispositif d'injection d'essai et le moyen d'injection globale peuvent être confondus et constitués par une même pompe doseuse propre à injecter le produit de conditionnement dans la totalité du débit de liquide circulant dans la conduite, le système de vision industrielle étant installé sur cette même conduite.

Dans le cas où le liquide à traiter circule dans une conduite principale, l'installation peut comporter une conduite de dérivation de la conduite principale, et une unité comportant le dispositif d'injection d'essai, le système de vision industrielle et le calculateur ou automate programmable, est disposée sur la conduite de dérivation, tandis que le moyen d'injection globale est constitué par une pompe doseuse, distincte du dispositif d'injection d'essai, propre à injecter le produit de conditionnement dans la conduite principale.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est un diagramme illustrant le procédé de traitement selon l'invention, et représentant, en fonction du temps porté en abscisse, la variation du taux de conditionnement porté sur l'axe des ordonnées à droite, et la variation du rapport L/S porté sur l'axe des ordonnées à gauche.
Fig. 2 est une vue schématique d'une installation de traitement mettant en oeuvre le procédé de l'invention, et
Fig. 3 est une vue schématique d'une variante de l'installation de traitement avec conduite de dérivation.

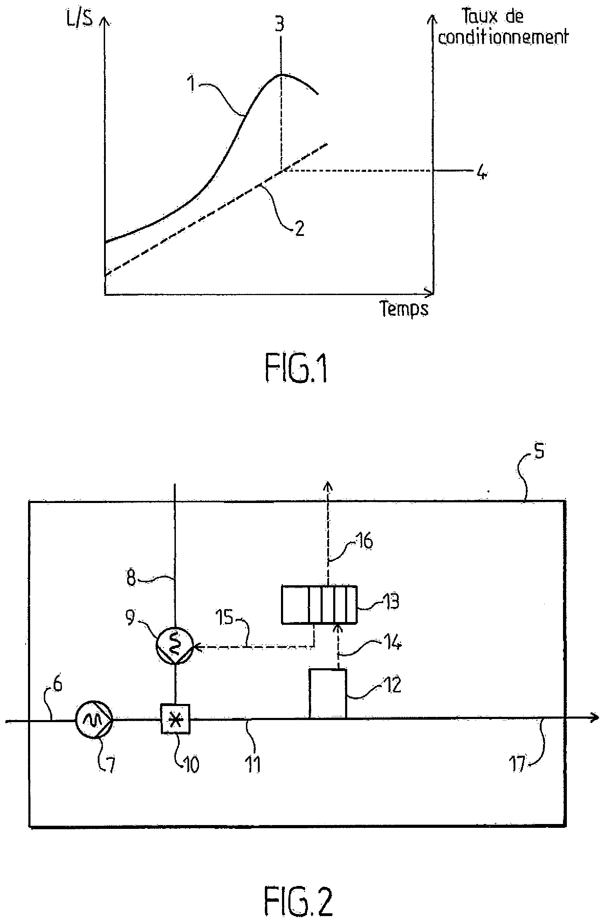

En se reportant à Fig.1 on peut voir l'illustration de la détermination de l'optimum du taux de traitement. Une courbe 1 représente l'évolution du rapport L/S du nombre de gros flocs au nombre de petits flocs dans le liquide à traiter, porté sur l'axe de gauche des ordonnées, après injection dans ce liquide du ou des produits de conditionnement, selon un taux porté sur l'axe de droite des ordonnées.

Une courbe 2 représente l'incrémentation, ou augmentation, du taux de conditionnement en fonction du temps porté en abscisse. La courbe 1 est montante jusqu'à un maximum 3, représentant l'optimum de floculation. Le taux de conditionnement optimum 4, associé à ce maximum, correspond au point indiqué sur l'axe de droite des ordonnées.

Après avoir déterminé le taux de conditionnement optimum, celui-ci est appliqué à une unité de conditionnement de l'installation industrielle de traitement, éventuellement avec un facteur de correction déterminé en fonction du type ou de la technologie de traitement mis en oeuvre sur l'installation industrielle.

Fig. 2 présente schématiquement une installation 5 de traitement selon l'invention. L'installation est alimentée par une conduite 6 en liquide contenant une suspension de matières solides. Une pompe 7 disposée sur la conduite 6 met le liquide en mouvement. Une alimentation en réactif(s) de conditionnement est effectuée par une conduite 8, sur laquelle est installée une pompe doseuse 9. Le(s) réactif(s) est (sont) alors acheminé(s) par la pompe 9, en vue de leur injection dans le liquide de la conduite 6. La pompe 9 constitue le dispositif d'injection d'un floculant dans le liquide à traiter.

Un mélangeur 10 est prévu sur la conduite 6 en aval de la pompe 7. Une entrée du mélangeur 10 est reliée à la sortie de la pompe 7, une autre entrée du mélangeur 10 est reliée à la sortie de la pompe 9. La floculation est réalisée par le mélangeur 10 animé par un moteur, et propre à apporter l'énergie de mélange nécessaire pour réaliser la floculation.

Le liquide contenant la suspension conditionnée sort du mélangeur par une conduite 11. Un système de vision industrielle 12 est disposé sur la conduite 11, en aval du mélangeur 10. Un tel système de vision industrielle 12 est disponible chez des équipementiers et comporte généralement une caméra vidéo à balayage pour former des images numériques des flocs générés dans le liquide, et des moyens d'analyse pour estimer la taille des flocs, et de préférence les dénombrer.

Le système de vision industrielle 12 analyse la qualité de floculation. Il envoie son analyse à un automate programmable 13 via la (les) connexion(s) 14. L'automate 13 permet d'enregistrer l'analyse de la qualité de la floculation, matérialisée par le rapport L/S (nombre de gros flocs/ nombre de petits flocs), en parallèle au taux de traitement fixé à la pompe 9 par la connexion 15. La taille des petits flocs (la taille étant définie comme la dimension moyenne du floc) peut être comprise entre 0,2 et 0,5 mm, et la taille des gros flocs peut être comprise entre 2,5 mm et 8,0 mm.

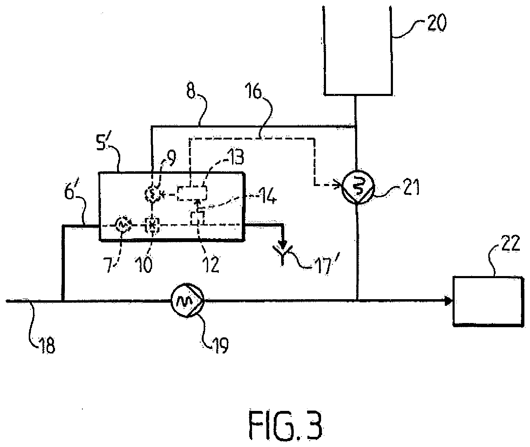

Une fois l'analyse terminée, l'automate 13 renvoie la valeur du taux de traitement optimum via la connexion 15 à la pompe doseuse 9 de réactif(s de traitement pour ajuster le taux à l'optimum et via la (les) connexion(s) 16 à une autre unité non représentée sur Fig. 2, mais constituée par une pompe 21 de réactif pour une conduite principale selon Fig. 3. L'évacuation du liquide, avec suspension floculée et analysée, est réalisée par une conduite 17, faisant suite au système de vision industrielle 12.

Dans le cas de Fig. 2, la pompe 9 constitue à la fois :
- un dispositif d'injection d'essai de floculant dont le débit d'injection est augmenté pour déterminer le maximum du rapport L/S et le taux de conditionnement optimum,
- et un moyen réglable d'injection globale du taux optimum de floculant dans la totalité du liquide à traiter.

Dans cas de Fig. 3, la pompe 9 constitue le dispositif d'injection d'essai de floculant pour déterminer le taux optimum sur une fraction dérivée de liquide à traiter, tandis qu'une autre pompe 21 constitue le moyen réglable d'injection globale du taux optimum de floculant dans la totalité du liquide à traiter.

Selon le diagramme de Fig. 2, le taux de conditionnement en polymère augmente linéairement à partir d'une valeur basse, non nulle. La valeur de départ pourrait être nulle en l'absence d'éléments pour déterminer une valeur de départ non nulle. La durée de l'incrémentation pour atteindre le maximum du rapport L/S peut être de l'ordre de 10 minutes. La fréquence des mesures effectuées par le système de vision industrielle peut atteindre 40 secondes. La procédure de détermination du maximum du rapport L/S peut être renouvelée périodiquement, en particulier toutes les heures.

La vitesse de passage du liquide, en particulier de la boue, devant la caméra du système de vision industrielle est avantageusement comprise entre 0,1 et 0,5 mètre/seconde.

La présente invention repose sur le fait que la mesure des flocs est faite dans des conditions identiques au procédé de conditionnement.

Le contrôle de l'état de floculation est issu d'une analyse instantanée de la représentation numérisée de la floculation, contrairement à un contrôle de paramètres physico-chimiques de la suspension: les incertitudes relatives à la qualité de la suspension sont, dans ce cas, supprimées.

### Exemple de réalisation :

Pour permettre au système d'être implanté sur tous types d'installation (nature et débit de la suspension), le système peut être placé en dérivation de la conduite principale de conditionnement industrielle.

Dans le cadre d'un conditionnement de boues biologiques épaissies, présent sur une usine de traitement d'eaux résiduaires urbaines, l'installation comporte une unité 5' (Fig. 3), semblable à l'installation 5 de Fig. 2, qui est placée sur une conduite 6'en dérivation d'une conduite principale 18 de liquide soumis au conditionnement. L'unité 5' détermine alors le taux de traitement optimum, en particulier un rapport de débit: Q _{de réactif} / m³ _{d'effluent}. Connaissant le débit de pompage de l'effluent sur un atelier et la plage de fonctionnement de la (des) pompe(s) doseuse(s) 21, le système corrige le débit de la (des) pompe(s) doseuse(s) pour appliquer le taux de traitement optimum sur la ligne de conditionnement.

Fig. 3 illustre cette application. Les éléments de Fig. 3 identiques ou similaires à des éléments déjà décrits précédemment sont désignés par les mêmes référence, éventuellement suivies du signe de l'apostrophe ', sans que leur description soit reprise, ou reprise en détail.

On observe l'intégration de l'unité 5' dans la ligne de conditionnement. L'alimentation de la ligne, de conditionnement en boue épaissie est réalisée par une conduite 18. La (les) pompe(s) à boues 19 de l'atelier transporte(nt) les boues. La conduite 6' d'alimentation de l'unité 5' est branchée en dérivation sur la conduite principale 18.

L'unité 5' comporte la pompe 9 constituant le dispositif d'injection d'essai de floculant dans la conduite dérivée 6', pour déterminer le maximum du rapport L/S et le taux de conditionnement optimum. L'unité 5' comporte le mélangeur 10, l'automate 13 et le système de vision industrielle 12, intervenant sur la conduite 6', comme exposé pour Fig. 2. L'estimation de la taille des flocs, du rapport L/S, et du taux de conditionnement correspondant au maximum obtenu pour le rapport L/S est effectuée sur l'écoulement dans la conduite dérivée 6'. Le liquide de la conduite 6', après traitement, est évacué vers un rejet 17'. En variante, le liquide de la conduite 6' pourrait être réintroduit en amont de l'unité de traitement des boues.

Un réservoir de solution de polymère 20 alimente en dérivation, la conduite 8' allant à l'unité 5' pour la pompe d'injection de réactif dans la conduite dérivée 6'.

Une (des) pompe(s) doseuse(s) 21 de l'atelier de conditionnement est (sont) prévue(s) pour injecter le (les) réactif(s) de conditionnement dans la conduite principale 18, en aval du branchement de la conduite 6'. La pompe 21 constitue le moyen réglable d'injection globale dans la totalité du liquide à traiter. Sur Fig. 3, la (les) connexion(s) 16 entre l'automate de l'unité 5' et la (les) pompe(s) doseuse(s) 21 de l'atelier est (sont) mise(s) en évidence. C'est à travers elle(s) que les opérations de pilotage de la pompe 21 sont effectuées. Le débit de réactif(s) injecté par la pompe 21 est réglé à la valeur optimale commandée par l'unité 5' et transmise par la connexion 16. En aval, un système de déshydratation 22 est matérialisé.

L'implantation telle que décrite, permet d'assurer de manière périodique ou permanente l'ajustement automatique du taux de traitement. Cette implantation est facile à réaliser sur une installation existante, en particulier avec mise en place d'une dérivation.

A titre d'exemple non limitatif, pour un débit de l'ordre de 50m3/heure dans la conduite principale 18, le débit dans la conduite de dérivation 6' peut être de 1 à 4m3/heure, adapté aux possibilités du système de vision industrielle. La circulation dans la conduite dérivée n'a lieu que pendant la durée des mesures.

Les applications industrielles suivantes peuvent être mentionnées :
- Traitement d'épuration d'effluents urbains
- Traitement d'épuration d'effluents industriels
- Traitement de potabilisation d'une eau brute
- Epaississement ou déshydratation de résidus d'épuration d'effluents urbains
- Epaississement ou déshydratation de résidus d'épuration d'effluents industriels
- Epaississement ou déshydratation de résidus d'épuration d'effluents de traitement de potabilisation.

## Revendications

1. Procédé de traitement d'un liquide contenant une suspension, en particulier eau brute, boues, effluents urbains ou industriels, comportant une étape de floculation par injection, dans le liquide à traiter, d'un ou plusieurs produits de conditionnement selon un taux de conditionnement, afin de générer des flocs pour une séparation ultérieure solide/liquide, selon lequel :
- on estime, par un système de vision industrielle (12), la taille des flocs,
- on classe les flocs en deux catégories à savoir gros flocs et petits flocs avec dénombrement par catégorie,
- on estime le rapport L/S du nombre L de gros flocs au nombre S de petits flocs, **caractérisé en ce que** :
- on augmente, en fonction du temps, le taux de conditionnement à partir d'une valeur basse paramétrable,
- on suit la variation (2) du taux de conditionnement et du rapport L/S (1) jusqu'à atteindre un maximum (3) pour ce rapport,
- et on choisit, pour l'étape de floculation, le taux de conditionnement (4) correspondant au maximum obtenu pour le rapport L/S.

2. Procédé selon la revendication 1, **caractérisé en ce que** l'on augmente de manière continue, en particulier de manière linéaire, en fonction du temps, le taux de conditionnement du ou des produits de conditionnement.

3. Procédé selon la revendication 1, **caractérisé en ce que** l'on augmente de manière discontinue, en particulier par échelons, en fonction du temps, le taux de conditionnement du ou des produits de conditionnement.

4. Procédé selon l'une quelconque des revendications précédentes, pour un liquide à traiter circulant dans une conduite (6), **caractérisé en ce que** les estimations sont effectuées en ligne, et l'injection de produit de conditionnement dans la conduite est assurée par une pompe doseuse (9) dont le débit est piloté pour assurer l'augmentation du taux de traitement.

5. Procédé selon l'une quelconque des revendications 1 à 3, pour un liquide à traiter circulant dans une conduite principale (18), **caractérisé en ce que** la variation du taux de conditionnement et du rapport L/S jusqu'à atteindre un maximum pour ce rapport, et l'estimation du taux optimum sont effectuées sur une fraction du débit de la conduite principale, dans une conduite dérivée (6'), et le taux de conditionnement optimum est appliqué au débit de la conduite principale (18).

6. Procédé selon l'une quelconque des revendications précédentes, **caractérisé en ce que** la durée de l'augmentation du taux de conditionnement est d'environ 10 minutes.

7. Procédé selon l'une quelconque des revendications précédentes, **caractérisé en ce que** la détermination du maximum du rapport L/S est renouvelée périodiquement, en particulier par période d'1 heure.

8. Installation de traitement d'eau ou de boues, pour la mise en oeuvre du procédé selon l'une quelconque des revendications précédentes, comportant :
- des moyens d'alimentation (7, 19) en liquide à traiter,
- un moyen réglable d'injection globale (9, 21) de produit(s) de conditionnement dans la totalité du liquide à traiter,
-- un système de vision industrielle (12) propre à estimer la taille des flocs,
- un calculateur ou automate programmable (13) dont une entrée est reliée à une sortie du système de vision industrielle (12) pour en recevoir les informations sur les flocs, et établir un rapport L/S du nombre de gros flocs au nombre de petits flocs, et commander le moyen réglable d'injection (9, 21),
**caractérisée en ce que** :
- ladite installation comporte un dispositif d'injection d'essai (9) de produit(s) de conditionnement dans tout ou fraction du liquide à traiter,
- le calculateur (13) est programmé pour
- commander le dispositif d'injection d'essai (9) et faire augmenter, en fonction du temps, le débit d'injection et le taux de conditionnement à partir d'une valeur basse paramétrable,
- suivre la variation (2) du taux de conditionnement et du rapport L/S (1) jusqu'à atteindre un maximum (3) pour ce rapport,
- et appliquer au moyen d'injection globale (9, 21), pour l'étape de floculation, le taux de conditionnement correspondant au maximum obtenu pour le rapport L/S.

9. Installation selon la revendication 8, **caractérisée en ce qu'**elle comporte un dispositif de mélange (10) du floculant en aval du dispositif d'injection d'essai (9) et en amont du système de vision industrielle (12).

10. Installation selon la revendication 8 ou 9, dans laquelle le liquide à traiter circule dans une conduite (6), **caractérisée en ce que** le dispositif d'injection d'essai et le moyen d'injection globale sont confondus et constitués par une même pompe doseuse (9) propre à injecter le produit de conditionnement dans la totalité du débit de liquide circulant dans la conduite (6), le système de vision industrielle (12) étant installé sur cette même conduite (6, 11).

11. Installation selon la revendication 8 ou 9, dans laquelle le liquide à traiter circule dans une conduite principale (18), **caractérisée en ce qu'**elle comporte une conduite de dérivation (6') de la conduite principale, une unité (5') comportant le dispositif d'injection d'essai, le système de vision industrielle et le calculateur ou automate programmable, étant disposée sur la conduite de dérivation (6'), tandis que le moyen d'injection globale est constitué par une pompe doseuse (21), distincte du dispositif d'injection d'essai, propre à injecter le produit de conditionnement dans la conduite principale (18).

## Patentansprüche

1. Verfahren zur Behandlung einer Flüssigkeit, die eine Suspension aufweist, insbesondere Rohwasser, Schlamm oder städtische oder Industrieabwässer, mit einem Schritt des Ausflockens durch das Einspritzen eines oder mehrerer Aufbereitungsprodukte in die zu behandelnde Flüssigkeit gemäß einem Aufbereitungsgrad, um Flocken für eine spätere Fest/Flüssig-Trennung, wobei
- durch ein industrielles Bildverarbeitungssystem (12) die Größe der Flocken geschätzt wird,
- die Flocken in zwei Kategorien, nämlich große Flocken und kleine Flocken eingeteilt werden, wobei eine Zählung pro Kategorie erfolgt,
- das Verhältnis L/S der Anzahl L der großen Flocken zur Anzahl S der kleinen Flocken geschätzt wird,
**dadurch gekennzeichnet, dass**
- der Aufbereitungsgrad in Abhängigkeit von der Zeit ausgehend von einem parametrierbaren geringen Wert erhöht wird,
- die Änderung (2) des Aufbereitungsgrads und des Verhältnisses L/S (1) überwacht wird, bis ein Maximum (3) für dieses Verhältnis erreicht wird,
- und für den Schritt des Ausflockens der Aufbereitungsgrad (4) gewählt wird, welcher dem für das Verhältnis L/S erhaltene Maximum entspricht.

2. Verfahren nach Anspruch 1, **dadurch gekennzeichnet, dass** der Aufbereitungsgrad des oder der Aufbereitungsprodukte kontinuierlich, insbesondere linear, in Abhängigkeit von der Zeit erhöht wird.

3. Verfahren nach Anspruch 1, **dadurch gekennzeichnet, dass** der Aufbereitungsgrad des oder der Aufbereitungsprodukte diskontinuierlich, insbesondere stufenweise, in Abhängigkeit von der Zeit erhöht wird.

4. Verfahren nach einem der vorhergehenden Ansprüche, für eine in einer Leitung (6) umlaufende, zu behandelnde Flüssigkeit, **dadurch gekennzeichnet, dass** die Schätzungen online vorgenommen werden, und dass das Einspritzen des Aufbereitungsprodukts durch eine Dosierpumpe (9) gewährleistet ist, deren Fördermenge zur Gewährleistung der Erhöhung des Behandlungsgrades gesteuert wird.

5. Verfahren nach einem der Ansprüche 1 bis 3, für eine in einer Hauptleitung (18) umlaufende, zu behandelnde Flüssigkeit, **dadurch gekennzeichnet, dass** die Änderung des Aufbereitungsgrads und des Verhältnisses L/S bis zum Erreichen eines Maximums für das Verhältnis und das Schätzen des optimalen Grades in einer Abzweigleitung (6') unter Verwendung eines Teils der Durchflussmenge der Hauptleitung durchgeführt werden, und der optimale Aufbereitungsgrad auf die Durchflussmenge der Hauptleitung (18) angewandt wird.

6. Verfahren nach einem der vorhergehenden Ansprüche, **dadurch gekennzeichnet, dass** die Dauer der Erhöhung des Aufbereitungsgrades ungefähr 10 Minuten beträgt.

7. Verfahren nach einem der vorhergehenden Ansprüche, **dadurch gekennzeichnet, dass** die Bestimmung des Maximums des Verhältnisses L/S periodisch wiederholt wird, insbesondere in einem Zeitabstand von 1h.

8. Anlage zur Behandlung von Wasser oder Schlamm unter Verwendung des Verfahrens nach einem der vorhergehenden Ansprüche, mit:
- Einrichtungen (7, 19) zum Zuführen von zu behandelnder Flüssigkeit,
- einer regelbaren Einrichtung (9, 21) zum Einspritzen des (der) gesamten Aufbereitungsprodukts (-produkte) in die gesamte zu behandelnde Flüssigkeit,
- einem industriellen Bildverarbeitungssystem (12), das zum Schätzen der Flockengröße geeignet ist,
- einem Rechner oder einem programmierbaren Automaten (13), wobei ein Eingang desselben mit einem Ausgang des industriellen Bildverarbeitungssystems (12) verbunden ist, um von diesem die Informationen über die Flocken zu erhalten, und ein Verhältnis L/S der Anzahl der großen Flocken zur Anzahl der kleinen Flocken zu ermitteln, und die regelbare Einspritzeinrichtung (9, 21) zu steuern,
**dadurch gekennzeichnet, dass**
- die Anlage eine Vorrichtung (9) zur Testeinspritzung des (der) Aufbereitungsprodukts (-produkte) in die Gesamtheit oder einen Teil der zu behandelnden Flüssigkeit,
- der Rechner (13) programmiert ist, um
- die Testeinspritzvorrichtung (9) zu steuern und die Einspritzmenge und den Aufbereitungsgrad in Abhängigkeit von der Zeit ausgehend von einem parametrierbaren geringen Wert zu erhöhen,
- die Änderung (2) des Aufbereitungsgrades und des Verhältnisses L/S (1) zu überwachen, bis ein Maximum (3) für dieses Verhältnis erreicht ist,
- und, für den Schritt des Ausflockens, den Aufbereitungsgrad auf die auf die Gesamteinspritzeinrichtung (9, 21) anzuwenden, welcher dem für das Verhältnis L/S erhaltene Maximum entspricht.

9. Anlage nach Anspruch 8, **dadurch gekennzeichnet, dass** sie stromabwärts der Testeinspritzvorrichtung (9) und stromaufwärts des industriellen Bildverarbeitungssystems (12) eine Flockungsmittel-Mischvorrichtung (10) aufweist.

10. Anlage nach Anspruch 8 oder 9, bei welcher die zu behandelnde Flüssigkeit in einer Leitung (6) zirkuliert, **dadurch gekennzeichnet, dass** die Testeinspritzvorrichtung und die Gesamteinspritzeinrichtung zusammenfallen und durch dieselbe Dosierpumpe (9) gebildet sind, die geeignet ist, das Aufbereitungsprodukt in die Gesamtheit der in der Leitung (6) zirkulierenden Flüssigkeitsmenge einzuspritzen, wobei das industrielle Bildverarbeitungssystem (12) an derselben Leitung (6, 11) installiert ist.

11. Anlage nach Anspruch 8 oder 9, bei welcher die zu behandelnde Flüssigkeit in einer Hauptleitung (18) zirkuliert, **dadurch gekennzeichnet, dass** sie eine Abzweigleitung (6') der Hauptleitung aufweist, wobei eine die Testeinspritzvorrichtung, das industrielle Bildverarbeitungssystem und des Rechner oder den programmierbaren Apparat aufweisende Einheit (5') an der Abzweigleitung (6') angeordnet ist, während die Gesamteinspritzeinrichtung durch eine von der Testeinspritzvorrichtung verschiedene Dosierpumpe (21) gebildet ist, die in der Lage ist, das Aufbereitungsprodukt in die Hauptleitung (19) einzuspritzen.

## Claims

1. A process for treating a liquid containing a suspension, in particular raw water, sludge, urban or industrial effluents, comprising a step of flocculation by injecting one or more conditioning products into the liquid to be treated according to a rate of conditioning, in order to generate flocs for a subsequent solid/liquid separation, according to which process:
- the size of the flocs is estimated by means of an industrial viewing system (12),
- the flocs are categorized into two categories, namely large flocs and small flocs, with counting by category,
- the L/S ratio of the number L of large flocs to the number S of small flocs is estimated,
**characterized in that**:
- the rate of conditioning is increased, as a function of time, from a parameterizable low value,
- the variation (2) in the rate of conditioning and in the L/S ratio (1) are monitored until a maximum (3) is reached for this ratio,
- and, for the flocculation step, the rate of conditioning (4) corresponding to the maximum obtained for the L/S ratio is chosen.

2. The process as claimed in claim 1, **characterized in that** the rate of conditioning of the conditioning product(s) is increased continuously, in particular linearly, as a function of time.

3. The process as claimed in claim 1, **characterized in that** the rate of conditioning of the conditioning product(s) is increased batchwise, in particular in steps, as a function of time.

4. The process as claimed in any one of the preceding claims, for a liquid to be treated which is circulating in a pipe (6), **characterized in that** the estimations are carried out on line, and the injection of conditioning product into the pipe is carried out by a metering pump (9) of which the flow rate is controlled in order to carry out the increase in the treatment rate.

5. The process as claimed in any one of claims 1 to 3, for a liquid to be treated which is circulating in a main pipe (18), **characterized in that** the variation in the rate of conditioning and in the L/S ratio until a maximum is reached for this ratio, and the estimation of the optimum rate, are carried out on a fraction of the flow of the main pipe, in a bypass pipe (6'), and the optimum rate of conditioning is applied to the flow of the main pipe (18).

6. The process as claimed in any one of the preceding claims, **characterized in that** the duration of the increase in the rate of conditioning is approximately 10 minutes.

7. The process as claimed in any one of the preceding claims, **characterized in that** the determination of the maximum of the L/S ratio is periodically repeated, in particular by periods of 1 hour.

8. A water or sludge treatment facility, for carrying out the process as claimed in any one of the preceding claims, comprising:
- means for feeding (7, 19) with liquid to be treated,
- an adjustable means for overall injection (9, 21) of conditioning product(s) into all of the liquid to be treated,
- an industrial viewing system (12) suitable for estimating the size of the flocs,
- a programmable computer or automated device (13) of which an inlet is connected to an outlet of the industrial viewing system (12) so as to receive therefrom the information regarding the flocs, and to establish an L/S ratio of the number of large flocs to the number of small flocs, and to control the adjustable injection means (9, 21),
**characterized in that**:
- said facility comprises a device for test injection (9) of conditioning product(s) into all or a fraction of the liquid to be treated,
- the computer (13) is programmed so as
- to control the test injection device (9) and to increase, as a function of time, the injection flow rate and the rate of conditioning from a parameterizable low value,
- to monitor the variation (2) in the rate of conditioning and in the L/S ratio (1) until a maximum (3) is reached for this ratio,
- and to apply, to the overall injection means (9, 21), for the flocculation step, the rate of conditioning corresponding to the maximum obtained for the L/S ratio.

9. The facility as claimed in claim 8, **characterized in that** it comprises a device for mixing (10) the flocculant downstream of the test injection device (9) and upstream of the industrial viewing system (12).

10. The facility as claimed in claim 8 or 9, wherein the liquid to be treated circulates in a pipe (6), **characterized in that** the test injection device and the overall injection means are combined and consist of the same metering pump (9) suitable for injecting the conditioning product into all of the flow of liquid circulating in the pipe (6), the industrial viewing system (12) being installed on this same pipe (6, 11).

11. The facility as claimed in claim 8 or 9, wherein the liquid to be treated circulates in a main pipe (18), **characterized in that** it comprises a pipe for bypassing (6') the main pipe, and a unit (5') comprising the test injection device, the industrial viewing system and the programmable computer or automated device being placed on the bypass pipe (6'), while the overall injection means consists of a metering pump (21), distinct from the test injection device, suitable for injecting the conditioning product into the main pipe (18).
